# EUROPÄISCHE PATENTSCHRIFT

(11) **EP 1 982 311 B1**
(45) Veröffentlichungstag und Bekanntmachung des Hinweises auf die Patenterteilung: **01.08.2018**
(21) Anmeldenummer: 07703965.9
(22) Anmeldetag: 18.01.2007
(51) Int. Cl.: G07C 5/08, G06K 7/00

(54) **VERFAHREN ZUM BETRIEB EINES FAHRTSCHREIBERS**
METHOD FOR OPERATING A TACHOGRAPH
PROCÉDÉ D'UTILISATION D'UN TACHYGRAPHE

(30) Priorität: 10.02.2006 DE 102006006453
(43) Veröffentlichungstag der Anmeldung: 22.10.2008
(73) Patentinhaber: Continental Automotive GmbH, 30165 Hannover (DE)
(72) Erfinder: KLOSTERMEIER, Dieter, 78050 Villingen-Schwenningen (DE); NÄTHER, Horst, 78052 Villingen-Schwenningen (DE); RIESTER, Thomas, 78052 Villingen-Schwenningen (DE); WOLF, Peter, 78078 Niedereschach (DE)
(86) Internationale Anmeldenummer: PCT/EP2007/050468
(87) Internationale Veröffentlichungsnummer: WO 2007/090722

(56) Entgegenhaltungen:
- EP-A- 0 490 860
- WO-A-02/073543
- DE-C2- 2 954 742

## Beschreibung

Die Erfindung betrifft ein Verfahren zum Betrieb eines Fahrtschreibers, bei dem nach dem Einführen einer Chipkarte in einen Schacht zunächst eine Kommunikation zwischen der in dem Schacht eingeführten Chipkarte und dem Fahrtschreiber aufgebaut wird und anschließend Daten auf die Chipkarte übertragen werden. Fahrtschreiber für Kraftfahrzeuge, insbesondere für Lastkraftwagen, erfassen und werten Daten bezüglich einer Fahrtstrecke und eines Fahrers des Kraftfahrzeuges aus und sind aus der Praxis bekannt. Die Chipkarte dient unter anderem zum Abspeichern der Daten des Fahrers, die in dem Fahrtschreiber erzeugt werden, und weist einen Chip mit Kontaktflächen auf, welche mittels in den Schacht angeordneten Federkontakten kontaktiert werden. Ein Problem beim Übertragen der Daten auf die Chipkarte kann dann entstehen, wenn die Federkontakte oder die Kontaktflächen verschmutzt oder korrodiert sind. In diesem Fall können die Daten nicht mehr von dem Fahrtschreiber auf die Chipkarte übertragen werden und im ungünstigsten Fall geht eine größere Datenmenge verloren. Ebenso kann bei einer bereits seit längerer Zeit in den Schacht eingeführten Karte die Verbindung der Federkontakte mit den Kontaktflächen durch Temperatur- und Feuchteinflüsse beeinträchtigt werden. Aus Dokument DE 29 54 742 C2 ist ein Verfahren zum Herstellen einer elektrischen Verbindung zwischen Anschlusskontakten eines elektrischen Apparats und zugeordneten Kontaktelementen einer Kreditkarte bekannt. Ein Rotationssinn eines Antriebsmotors zum Antrieb der Kreditkarte ist mittels eines Wechselschalters umkehrbar, und die Kreditkarte kann in eine Bewegung versetzt werden, um zu versuchen, einen einwandfreien Kontakt zwischen den Anschlusskontakten und den Kontaktelementen zu erzielen. Es wird eine Überprüfung durchgeführt, ob ein elektrischer Kontakt zwischen den Anschlusskontakten und den Kontaktelementen korrekt hergestellt worden ist.

Aus Dokument WO 02/073543 A2 ist eine Aufnahmevorrichtung für Chipkarten bekannt, wobei ein motorisch betätigtes Transportmittel vorgesehen sein kann. Eine Datenlese- und Transportroutine innerhalb der Aufnahmevorrichtung zwischen einer Lese-/Schreibstation der Chipkarte und einer Parkposition soll mehrmals wiederholt werden können.

Der Erfindung liegt das Problem zugrunde, ein Verfahren der eingangs genannten Art so weiterzubilden, dass es eine besonders zuverlässige Kommunikation des Fahrtschreibers mit der Chipkarte ermöglicht.

Das Problem wird erfindungsgemäß dadurch gelöst, dass die Übertragung der Daten überwacht, wobei die im Gerät befindlichen und auf die Chipkarte übertragenen Daten unmittelbar nach der Übertragung wieder ausgelesen und mit den im Gerät befindlichen Daten verglichen werden, und bei Feststellung eines Fehlers in der Übertragung der Daten die Chipkarte ein Stück weit aus dem Schacht heraus bewegt und wieder eingezogen wird und dass anschließend erneut eine Kommunikation zwischen der in dem Schacht eingeführten Chipkarte und dem Fahrtschreiber aufgebaut wird und dass die Bewegung der Chipkarte aus dem Schacht heraus und wieder in den Schacht hinein zweimal unmittelbar hintereinander ausgeführt wird. Durch diese Gestaltung reiben die Federkontakte des Fahrtschreibers über die Kontaktflächen und beseitigen mögliche Verschmutzungen auf der Chipkarte. Da die Übertragung der Daten überwacht wird, können Fehler sofort erfasst und durch nochmaliges Übertragen der Daten ausgeglichen werden. Mit dem erfindungsgemäßen Verfahren stellt der Fahrtschreiber selbst sicher, dass die Daten zuverlässig auf die Chipkarte übertragen werden und führt bei Fehlern in der Übertragung der Daten selbständig eine Beseitigung einer möglichen Fehlerquelle durch.

Bei starken Verschmutzungen der Chipkarte ermöglicht das erfindungsgemäße Verfahren eine besonders schnelle Übertragung der Daten, weil die Bewegung der Chipkarte aus dem Schacht heraus und wieder in den Schacht hinein zweimal unmittelbar hintereinander ausgeführt wird. Sofern eine Reinigung der Kontaktflächen der Chipkarte mit einer einzigen Bewegung nicht ausreichend ist, ist die erfindungsgemäße zweimalige Bewegung schneller als wenn nach der ersten Bewegung der Chipkarte versucht wird, eine Kommunikation aufzubauen.

Häufig werden die Daten in Intervallen, beispielsweise alle 12 Stunden, von dem Fahrtschreiber auf die Chipkarte übertragen. Eine Verschmutzung der Federkontakte oder der Kontaktflächen zwischen den Intervallen lässt sich gemäß einer anderen vorteilhaften Weiterbildung der Erfindung einfach beseitigen, wenn nach einer vorgesehenen Zeitspanne, in der die Chipkarte in dem Schacht eingeführt ist, vor der Erzeugung der Kommunikation zwischen der Chipkarte und dem Fahrtenschreiber die Chipkarte ein Stück weit aus dem Schacht heraus bewegt und wieder eingezogen wird.

Eine endlose Bewegung der Chipkarte, mit der keine Kommunikation aufgebaut werden kann, lässt sich gemäß einer anderen vorteilhaften Weiterbildung der Erfindung einfach vermeiden, wenn nach einer vorgesehenen Anzahl von vergeblichen Versuchen zum Aufbau der Kommunikation zwischen der Chipkarte und dem Gerät und anschließender Bewegung der Karte die Chipkarte aus dem Schacht ausgeworfen wird.

Das erfindungsgemäße Verfahren ermöglicht eine ausreichende Reinigung von gewöhnlich verschmutzten Chipkarten, wenn die Anzahl der Versuche zum Aufbau der Kommunikation und anschließender Bewegung der Chipkarte zwei beträgt.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch einen Fahrtschreiber mit einer Chipkarte,
- Fig. 2: ein Flussdiagramm des erfindungsgemäßen Verfahrens zur Übertragung von Daten auf die Chipkarte aus Figur 1.

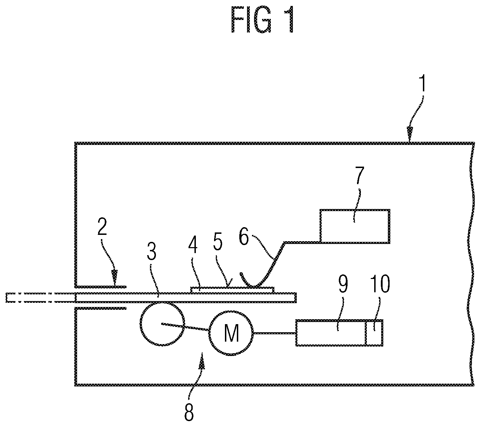

Figur 1 zeigt schematisch einen Fahrtschreiber 1 in einer Schnittdarstellung mit einem Schacht 2 zur Aufnahme einer Chipkarte 3. Die Chipkarte 3 weist einen Chip 4 mit Kontaktflächen 5 auf. Gegen die Kontaktflächen 5 sind Federkontakte 6 des Fahrtschreibers vorgespannt. Zur Vereinfachung der Zeichnung ist nur einer der Federkontakte 6 dargestellt. Die Federkontakte 6 sind mit einer elektronischen Einrichtung 7 zum Sammeln und Auswerten von Daten verbunden. Die Chipkarte 3 lässt sich von einem elektromotorischen Antrieb 8 in den Schacht 2 einziehen und aus diesem heraus fahren. In der Zeichnung strichpunktiert dargestellt ist die Chipkarte 3 in einer ein Stück weit aus dem Schacht 2 heraus gefahrenen Stellung. Der elektromotorische Antrieb 8 wird von einer Steuereinrichtung 9 angesteuert. Die Steuereinrichtung 9 weist einen Speicher 10 für Bedingungen und einer Anzahl von vorgesehenen Bewegungen der Chipkarte 3 durch den elektromotorischen Antrieb 8 auf.

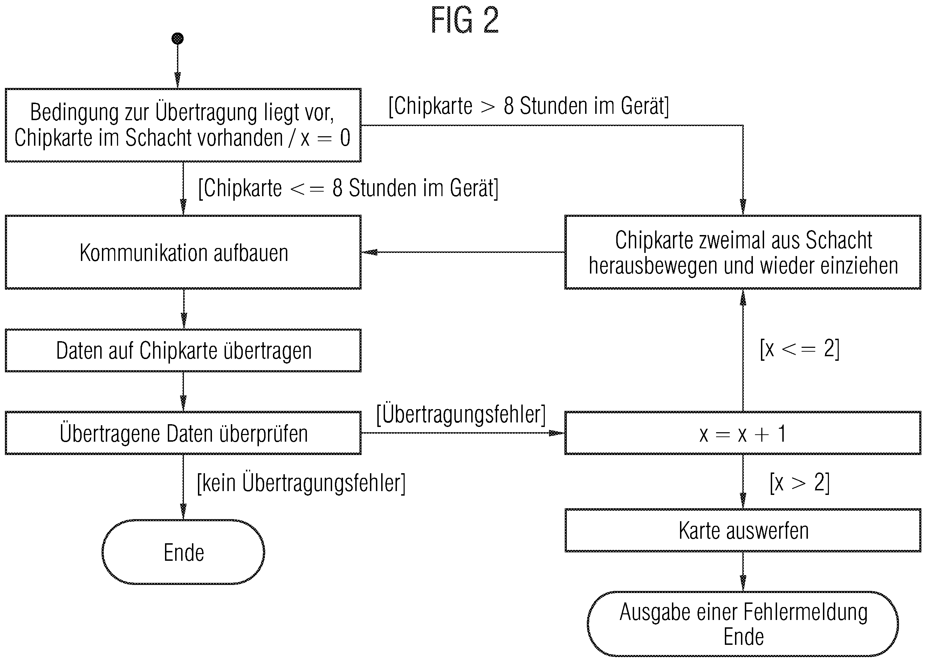

Figur 2 zeigt ein Flussdiagramm zur Durchführung eines Verfahrens zur Übertragung von Daten des Fahrtschreibers 1 auf die Chipkarte 3 aus Figur 1. Das Verfahren wird durch Einführen der Chipkarte 3 in den Schacht 2 des Fahrtschreibers 1 und bei Vorliegen von Bedingungen, dass Daten auf die Chipkarte 3 übertragen werden sollen, gestartet. Gleichzeitig wird ein Zählwerk auf null gesetzt. Das Vorliegen von Bedingungen kann beispielsweise von einem Intervall gesteuert werden, so dass beispielsweise täglich zu einer bestimmten Uhrzeit die Daten aus dem Fahrtschreiber 1 auf die Chipkarte 3 übertragen werden. Sofern sich die Chipkarte 3 länger als eine vorgesehene Zeitspanne von beispielsweise 8 Stunden bereits in dem Fahrtschreiber 1 befindet, wird die Chipkarte 3 durch Ansteuerung des elektromotorischen Antriebs 8 ein Stück weit aus dem Schacht 2 heraus bewegt und wieder eingezogen. Dabei reiben die Federkontakte 6 über die Kontaktflächen 5 der Chipkarte 3 und streifen mögliche vorhandene Verschmutzungen ab. Anschließend oder wenn die Chipkarte 3 erst kurz zuvor in den Schacht 2 eingeführt wurde, wird die Kommunikation der elektronischen Einrichtung mit dem Chip 4 der Chipkarte 3 aufgebaut und die Daten übertragen. Anschließend werden die Daten wieder ausgelesen und mit den zu übertragenen Daten verglichen. Dabei lässt sich ein Übertragungsfehler feststellen. Wenn kein Übertragungsfehler festgestellt wurde, ist das Verfahren beendet. Bei einem Fehler in der Datenübertragung wird das Zählwerk um einen Zähler heraufgesetzt. Ist der Zähler kleiner oder gleich zwei, wird die Chipkarte 3 zweimal aus dem Schacht 2 heraus bewegt und wieder eingezogen. Anschließend wird erneut eine Kommunikation aufgebaut und die Datenübertragung beginnt von neuem. Ist jedoch der Zähler größer zwei, folgt daraus, dass bereits zwei Versuche stattgefunden haben, um die Kontaktflächen durch Bewegung der Chipkarte 3 zu reinigen. In diesem Fall wird die Chipkarte 3 mit einer Fehlermeldung ausgeworfen.

## Patentansprüche

1. Verfahren zum Betrieb eines Fahrtschreibers (1), bei dem nach dem Einführen einer Chipkarte (3) in einen Schacht (2) zunächst eine Kommunikation zwischen der in dem Schacht (2) eingeführten Chipkarte (3) und dem Fahrtschreiber (1) aufgebaut wird und anschließend Daten auf die Chipkarte (3) übertragen werden, **dadurch gekennzeichnet, dass** die Übertragung der Daten überwacht, wobei die im Gerät befindlichen und auf die Chipkarte (3) übertragenen Daten unmittelbar nach der Übertragung wieder ausgelesen und mit den im Gerät befindlichen Daten verglichen werden, und bei Feststellung eines Fehlers in der Übertragung der Daten die Chipkarte (3) ein Stück weit aus dem Schacht (2) heraus bewegt und wieder eingezogen wird und dass anschließend erneut eine Kommunikation zwischen der in dem Schacht (2) eingeführten Chipkarte (3) und dem Fahrtschreiber (1) aufgebaut wird und dass die Bewegung der Chipkarte (3) aus dem Schacht (2) heraus und wieder in den Schacht hinein zweimal unmittelbar hintereinander ausgeführt wird.

2. Verfahren nach Anspruch 1, **dadurch gekennzeichnet, dass** nach einer vorgesehenen Zeitspanne, in der die Chipkarte (3) in dem Schacht (2) eingeführt ist, vor der Erzeugung der Kommunikation zwischen der Chipkarte (3) und dem Fahrtschreiber (1) die Chipkarte (3) ein Stück weit aus dem Schacht (2) heraus bewegt und wieder eingezogen wird.

3. Verfahren nach zumindest einem der vorhergehenden Ansprüche, **dadurch gekennzeichnet, dass** nach einer vorgesehenen Anzahl von vergeblichen Versuchen zum Aufbau der Kommunikation zwischen der Chipkarte (3) und dem Gerät und anschließender Bewegung der Karte die Chipkarte (3) aus dem Schacht ausgeworfen wird.

4. Verfahren nach zumindest einem der vorhergehenden Ansprüche, **dadurch gekennzeichnet, dass** die Anzahl der Versuche zum Aufbau der Kommunikation und anschließender Bewegung der Chipkarte (3) zwei beträgt.

## Claims

1. Method for operating a tachograph (1), in which, following insertion of a smart card (3) into a shaft (2), communication is first established between the smart card (3), which is inserted in the shaft (2), and the tachograph (1), and data is then transmitted to the smart card (3), **characterized in that** the transmission of data is monitored, wherein the data which is contained in the device and transmitted to the smart card (3) is read out again immediately after transmission and is compared with the data contained in the device, and, when a fault is identified in the transmission of data, the smart card (3) is moved a short way out of the shaft (2) and drawn in again, and **in that** communication between the smart card (3), which is inserted in the shaft (2), and the tachograph (1) is then established again, and **in that** the movement of the smart card (3) out of the shaft (2) and back into the shaft is executed twice immediately in succession.

2. Method according to Claim 1, **characterized in that** the smart card (3) is moved a short way out of the shaft (2) and drawn in again after a stipulated period of time, for which the smart card (3) is inserted in the shaft (2), before communication is generated between the smart card (3) and the tachograph (1).

3. Method according to at least one of the preceding claims, **characterized in that** the smart card (3) is ejected from the shaft after a stipulated number of futile attempts at establishing communication between the smart card (3) and the device and subsequent movement of the card.

4. Method according to at least one of the preceding claims, **characterized in that** the number of attempts at establishing communication and subsequent movement of the smart card (3) is two.

## Revendications

1. Procédé pour faire fonctionner un tachygraphe (1), selon lequel, après l'introduction d'une carte à puce (3) dans un logement (2), une communication entre la carte à puce (3) introduite dans le logement (2) et le tachygraphe (1) est tout d'abord établie et ensuite des données sont transmises sur la carte à puce (3), **caractérisé en ce que** la transmission des données est surveillée, les données se trouvant dans l'appareil et transmises sur la carte à puce (3) étant de nouveau lues immédiatement après la transmission et comparées avec les données qui se trouvent dans l'appareil, et en cas de constatation d'une erreur dans la transmission des données, la carte à puce (3) est partiellement sortie du logement (2) puis de nouveau insérée et **en ce qu'**une communication est ensuite de nouveau établie entre la carte à puce (3) introduite dans le logement (2) et le tachygraphe (1) et **en ce que** le mouvement de la carte à puce (3) de sortie hors du logement (2) puis de rentrée dans le logement est exécuté deux fois directement l'une à la suite de l'autre.

2. Procédé selon la revendication 1, **caractérisé en ce qu'**après un intervalle de temps prévu, dans lequel la carte à puce (3) est introduite dans le logement (2), la carte à puce (3) est partiellement sortie du logement (2) puis de nouveau insérée avant de générer la communication entre la carte à puce (3) et le tachygraphe (1).

3. Procédé selon au moins l'une des revendications précédentes, **caractérisé en ce qu'**après un nombre prévu de tentatives infructueuses d'établir une communication entre la carte à puce (3) et l'appareil et ensuite de déplacer la carte, la carte à puce (3) est éjectée hors du logement.

4. Procédé selon au moins l'une des revendications précédentes, **caractérisé en ce que** le nombre de tentatives d'établir une communication et ensuite de déplacer la carte à puce (3) est de deux.
